# EUROPEAN PATENT SPECIFICATION

(11) **EP 1 869 343 B1**
(45) Date of publication and mention of the grant of the patent: **06.08.2014**
(21) Application number: 06722881.7
(22) Date of filing: 31.03.2006
(51) Int. Cl.: F16H 3/66

(54) **A PLANET GEAR**
PLANETENRAD
ENGRENAGE PLANETAIRE

(30) Priority: 01.04.2005 DK 200500460; 23.04.2005 DK 200500613; 24.11.2005 DK 200501647; 05.01.2006 DK 200600022; 25.01.2006 DK 200600108
(43) Date of publication of application: 26.12.2007
(73) Proprietor: Tomactech A/S, 2800 Kgs. Lyngby (DK)
(72) Inventor: PEDERSEN, Troels, DK-2990 Nivå (DK)
(74) Representative: Inspicos A/S
(86) International application number: PCT/DK2006/000189
(87) International publication number: WO 2006/102906

(56) References cited:
- EP-A- 0 613 758
- EP-A- 0 846 888
- EP-A- 1 326 032
- FR-A- 2 669 983
- GB-A- 2 102 532
- GB-A- 2 105 815
- GB-A- 2 197 700
- US-A- 1 632 123
- US-A- 3 596 538
- US-A- 3 686 978
- US-A- 4 214 489
- US-A- 4 621 541
- US-A- 5 577 976
- US-A1- 2004 211 576
- US-B1- 6 796 921
- YEAPLE F: "PLANETARY GEARS TAKE ON NEW JOBS" PRODUCT ENGINEERING, MCGRAW-HILL PUBLICATION, NEW YORK, NY, US, vol. 50, no. 5, May 1979 (1979-05), pages 37-41, XP002042675 ISSN: 0032-9754

## Description

### INTRODUCTION

The present invention relates to a series of gears which are meshed together to change the mechanical advantage between an input and an output shaft, in the following referred to as a gear system or a train of meshed gears. In particular, the invention relates to a system of epicyclic gears in which at least one wheel axis itself revolves about another fixed axis providing a gear ratio between the input shaft and the output shaft. The system comprises a primary internally driven annulus gear, a secondary internally driven annulus gear, a primary externally driven sun gear being rotatable around a central axis of the gear system, a secondary externally driven sun gear being rotatable around the central axis, a first set of externally driven planet gears, and a second set of externally driven planet gears. The planet gears are arranged to rotate epicyclically around the central axis. The planet gears are arranged to rotate at synchronous speed, and gears of one set of planet gears are meshed with one of the annulus gears and gears of another set of the planet gears are meshed with one of the sun gears.

### BACKGROUND OF THE INVENTION

Planet gearing is sometimes referred to as "Epicyclic gearing" and describes a gear system with a housing comprising one or more planet gears rotating about a centrally located sun gear. Sometimes, the planet gears are mounted on a movable carrier. The carrier may either be fixed relative to the housing, or it may rotate relative to the housing and/or relative to the sun gear. The gear system may further incorporate an outer ring gear with radially inwardly projecting gear teeth, generally referred to as the annulus. The annulus meshes with the planet gears and the planet gears again mesh with the sun gear. There are several ways in which an input rotation can be converted into an output rotation. In general, one of the above mentioned basic components, i.e. the sun, the carrier, or the annulus, is held stationary; one of the two remaining components is an input, providing power to the system, while the last component is an output, receiving power from the system. The ratio of input rotation to output rotation depends on the number of teeth in each gear included in the system and depends further on which component is held stationary. When e.g. the carrier is held stationary, and the sun gear is used as input, the planet gears simply rotate about their own axes at a rate determined by the number of teeth in each gear. If the sun gear has S teeth, and each planet gear has P teeth, the ratio is equal to S/P. If the annulus has A teeth, the planet gears drive the annulus in a ratio of P/A turns for each turn of the planet gears.

In one implementation of a planet gear system, the annulus is held stationary and the sun gear is used as the input. This provides the lowest gear ratio, i.e. 1/(1+A/S), attainable with a planet gear train.

### DESCRIPTION OF THE INVENTION

It is an object of the invention to provide an improved gear system. Accordingly, a first aspect of the invention provides a gear system as claimed in claim 1

This gear system offers a particularly low gear ratio at relatively small outer dimensions of the gear system, and it may therefore be applied in mechanical system with narrow space. Since, at the same time, the power received via the input shaft can be transmitted to the output shaft changeably via interaction between the gears of the first set of planet gears and the first sun gear and interaction between the gears of the second set of planet gears and the second sun gear, the gear system may facilitate different gear ratios at narrow spaces at which gears allowing gear-shifting has previously been too expensive, complicated or too sensitive and unreliable.

The claimed power tool has a coupling for selectively coupling one of the sun gears to the input shaft, and the output shaft is integral with the primary annulus gear. At the same time, the secondary annulus gear is fixed by a coupling which is flexible to allow adaptation of tolerances.

In the following, a gear will be referred to as an element which is driven by interaction with an adjacent gear or which drives an adjacent gear, i.e. power is transferred between the adjacent gears. Internally driven means that the gear is driven on an inner surface facing towards the central axis and externally driven means that the gear is driven on an outer surface facing away from the central axis. The interaction between adjacent gears may involve a traditional gear mesh via a toothing of cooperating surfaces of the gears or the interaction may be in accordance with the principles of traction gearing wherein power is transmitted through a fluid which forms a film between adjacent gears. The interaction may also be magnetic interaction wherein one gear drives an adjacent gear via magnetic forces. As an example, interaction between some of the gears may be through traction while interaction between other gears is through meshed toothed gear surfaces. Interaction between other gears of the system could be magnetically.

A gear wheel is an element which rotates around a wheel axis in the system. The gear wheel may form several gears - i.e. one single element may contain several axially displaced driven peripheral areas which are formed with individual characteristics to interact with adjacent gears.

The gear ratio is the ratio between the rotational speed (rounds per minute, in the following RPM) of the input shaft relative to the RPM of the output shaft. The input shaft is in the following defined as the shaft from which the gear system receives power e.g. from an electrical motor, a crankshaft of a bicycle etc, and the output shaft is the shaft by which the gear system transmits power, e.g. to a wheel of a bicycle etc. The gear wheels may be made from a synthetic material e.g. plastic, from metal or from any other material known *per se* for making gear wheels, e.g. by sintering. The toothing of toothed gears could be bevelled or straight, and the number of teeth as well as the pitch circle and other parameters determining the characteristics of the gears may be chosen based on traditional considerations concerning the transferred torque, noise suppression, rotational speeds of the various gears, and a desired gear ratio between each gear in the gear system.

Each set of planet gears may e.g. contain three, four or even more individual planet gears. The rotation of the planet gears of one set of planet gears is synchronous with the rotation of planet gears of the other sets of planet gears which means that there is a fixed ratio, e.g. 1:1 between the RPM of the gears in the first set and the gears in other sets of planet gears. The planet gears could e.g. be synchronised by gear meshes between planet gears in the first set of planet gears and planet gears in the second set of planet gears. The planet gears could also be synchronised to rotate at the ratio 1:1 by forming the gears of the first set of planet gears in a fixed connection with gears of the second set of planet gears. As an example, the gear system may contain one or more gear wheels each forming gears of different sets of planet gears in one piece.

The planet gears of one set of planet gears could be joined by a first planet carrier, the planet gears of another set of planet gears could be joined by a second planet carrier etc, or all planet gears could be joined by one single planet carrier.

Gears of the first set of planet gears is preferably meshed with the primary annulus gear and gears of the second set of planet gears is preferably meshed with the secondary annulus gear.

The gear system may further comprise at least one additional set of externally driven planet gears being rotatable epicyclically around the central axis synchronously with planet gears of the first and second sets of planet gears. Synchronisation may be achieved by interaction between gears of the additional set of planet gears and other planet gears in the system, and planet gears of the additional set of planet gears could be formed in one piece with the gears of other sets of planet gears. The system may further comprise at least one additional internally driven annulus gear being meshed with gears of the additional set of planet gears. In fact any number of planet gears, sun gears, and annulus gears may be implemented. The gear system may further comprise at least one additional sun gear, the system being changeable between the first, the second and at least one additional configuration in which power is transmitted between the input shaft and the output shaft via interaction between gears of one of the sets of planet gears and one of the additional sun gears.

In general, any one of the gears may serve as an input and another one of the gears may serve as an output. In order to change the gearing ratio between the input and the output, the remaining gears may either rotate freely, rotation may be hindered or rotation may be completely stopped. The gear system may therefore further comprise breaking means for limiting or preventing rotation of one of the annulus gears thus changing the gear ratio e.g. between a sun gear and another one of the annulus gears. In another embodiment, one of the annulus gears may receive power from an external source and another one of the annulus gears may deliver power to an external source. In this embodiment, braking means may be applied for limiting or preventing rotation of other gears of the system. As an example, the system may comprise braking means adapted to limit or prevent rotation of a planet carrier thereby changing the gear ratio between other gears of the gear system.

The sun gear could be movable relative to each planet gear between a position wherein the primary sun gear is meshed with at least one gear of the first set of planet gears and a position wherein the secondary sun gear is meshed with at least one gear of the second set of planet gears. In one embodiment, the sun gears are both fixed to, or they form part of one shared axle, e.g. an input shaft. The sun gears could be moved between the above-mentioned positions corresponding to mesh between one and the other of the sun gears with respective planet gears, by movement of the shaft, e.g. in an axial direction of the axle. In another embodiment, each planet gear is joined to the other planet gears by a planet carrier, and the planet gears are moved relative to the sun gears by movement of the planet carrier. The planet carrier may be rotatable around the centre axis and the planet carrier may form one of the input or the output for the gear system. As an example, the planet carrier could be connected directly to a motor which provides power to the gear system. In an alternative embodiment, the planet carrier comprises a gear which is driven by one of the sun gears.

The input shaft may preferably rotate around the centre axis, and as mentioned above, the input shaft may be integral with at least one of the sun gears.

In operation, one of the primary sun gear, secondary sun gear, primary annulus gear, secondary annulus gear, or planetary carrier (if the planet gears are fixed to a carrier) is held stationary while any one of the remaining gears may be attached to, or form part of the input shaft or the output shaft. The gear system may thus be adapted for at least 3 different modes of operation.

In a second embodiment, one of the sun gears is locked while the other sun gear, both of the annulus gears, and optionally a planet carrier rotates, and any of these parts could be joined with either the input shaft or the output shaft. As an example, the rotating sun gear could be rotated by the input shaft while both of the annulus gears may form outputs for the system. Depending upon the diameters of each of the gears included in the gear system, the input shaft (i.e. the rotating sun gear) may rotate at a speed s1, and the primary annulus gear may rotate at a speed s2, and the secondary annulus gear may rotate at a speed s3, wherein s1 is different from s2 which is different from s3.

In a third embodiment, the planet gears are fixed in a planetary carrier which is held stationary while either one of the sun gears or either one of the annulus gears may be used as input or output for the system.

In one embodiment, the primary sun gear is meshed with gears of the first set of planet gears and the secondary sun gear is meshed with gears of the second set of planet gears. In this embodiment, the system comprises coupling mean adapted, selectively, to couple one or the other of the sun gears to the input shaft and thereby to enable transmission of power from the input shaft to that sun gear. The primary sun gear could also be connected to a first driving means, e.g. to a first electrical motor, and the secondary sun gear could be connected to a second driving means, e.g. to a second electrical motor. The motors may be operated independently so that the primary sun gear is used as input when the first motor provides power input to the gear system, and the secondary sun gear is used as an input when the second motor provides input to the gear system. In this embodiment, the motor which is not operated may be decoupled from the sun gear to which it is connected, or the motor may be idling, driven by the sun gear to which it is connected.

In any of the mentioned embodiments, the gears of the first and second sets of planet gears may be interlocked to rotate with equal speed or they may be connected via a bearing allowing the gears to rotate relative to each other and thereby allowing one of the gears to rotate at a speed which is different from the speed of the other one.

In the first of the above mentioned embodiments, both the input and output shafts may rotate around the centre axis. The output shaft could e.g. be formed integrally with the primary annulus gear. In this embodiment, the secondary annulus gears could be fixed to a reference system via a coupling which, at least in a first state, limits or prevents rotation of the secondary annulus relative to the reference system. In a second state, the coupling may allow rotation of the secondary annulus relative to the reference system. E.g. to prevent overloading of a system, the coupling could be adapted to shift between the first and second states by torque applied to the secondary annulus. This feature facilitates use of the gear e.g. in a power tool such as a drill or screwdriver, e.g. for turning a screw or bolt, and in this operation, the coupling may protect the screws or other parts against overloading.

The primary annulus gear could be rotatably suspended in the secondary annulus gear, and the primary and secondary gear may form housing for other gears of the gear system. They may e.g. be assembled via a dust and/or water proof gasket to prevent contamination of the gears or to form a sealed housing in which gear oil can be contained.

To facilitate an additional ratio between the input and output speed of the system, the input shaft could be interlocked with the output shaft. In order to reduce noise and wear, transmission of power through the gears may preferably be interrupted upon the interlocking of the input shaft with the output shaft. In one embodiment, the input shaft may be shifted in an axial direction whereby the mesh between the sun gears and the planet gears is interrupted and whereby the input shaft engages the output shaft and thus drives the output at the speed of the input, i.e. the gear system operates at a ratio of 1:1.

In one embodiment, the primary and secondary sun gears have different diameters or pitch circles and/or the gears of the first and second set of planet gears have different diameters or pitch circles.

As previously mentioned, the invention may be implemented e.g. in a power tool such as a power screwdriver. In this application, the gear system according to the invention allows a compact design and a low weight of the power tool, while offering the opportunity of shifting between different gear/torque ratios. Furthermore, the gear system contains less components, in particular less gear wheels than known systems in which a gear shift and a comparable gear ratio is provided. The gear system may therefore be less expensive and more reliable.

The invention may be implemented in vehicles such as off-highway machinery, wheel loaders, excavators, dozers, tractors, harvesters and similar heavy duty machines or in cars or trucks. In such vehicles, the gear system may be located in each of the driving wheels and due to the compact design, the gear enables a large clearance between the bottom of the vehicle and the road. Since the gear is adapted for different configurations with different gear mesh, the implementation of the gear system in wheels of a vehicle offers the new and inventive feature of allowing gear shift in each of the wheels of the vehicle, individually.

The gear system may further be implemented as a servo gear. As an example, such a gear could be used in connection with robots, e.g. pick and place robots and in connection with similar automation equipment with servo motors, e.g. autonomous vehicles etc. In such applications, it is typically desired to enable fast motion when the equipment is unloaded and shift to a relatively slow speed with a higher torque when the equipment is loaded. The gear system according to the invention offers a compact design and the ability of performing such shifts between high and low speed versus low and high torque.

In a seventh aspect, the invention provides a vehicle comprising a plurality of wheels, each wheel being provided with power through a gear system of the kind described throughout this document.

In an eight aspect, the invention provides a power tool comprising an output provided with power through a gear system of the kind described throughout this document.

In a ninth aspect, the invention provides a servo gear system comprising a gear system of the kind described throughout this document.

In general, any of the second to the ninth aspect of the invention may be combined with the features described in relation to the first aspect of the invention.

### DETAILED DESCRIPTION

In the following, a preferred embodiment of the invention will be described in further details with reference to the drawing in which:
Fig. 1 illustrates a cross-sectional view of a gear system according to the invention,
Fig. 2 illustrates a perspective view of the gear shown in Fig. 1,
Figs. 3-4 illustrate in perspective view, the gear system shown in Figs 1 and 2,
Fig. 5 illustrates an alternative view of the gear,
Figs. 6a-6c illustrate a gear system in three different configurations, and
Figs. 7-9 illustrate gear systems with only one sun gear.

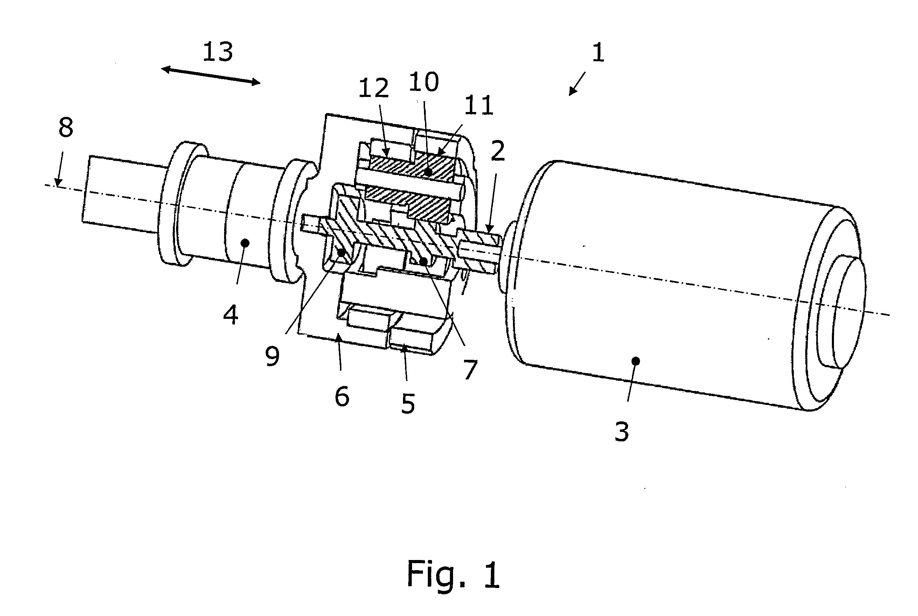

Fig. 1 shows a gear system 1 implemented in a power screwdriver. The gear system comprises an input shaft 2 coupled to an electrical motor 3. The gear system further comprises an output shaft 4 which is carried in a bearing. The system includes a primary internally toothed, and thus internally driven annulus gear 5, a secondary internally toothed annulus gear 6. The primary annulus gear is fixed to a surrounding stationary system, not shown in the drawing, and the secondary annulus gear forms part of the output shaft. The system further includes a primary externally toothed sun gear 7 being rotatable around a central axis 8 of the gear system. The system further includes a secondary externally toothed sun gear 9 being rotatable around the central axis, and a planet gear wheel 10 rotatable epicyclically around the central axis. The planet gear wheel comprises a first externally toothed planet gear 11, and a second externally toothed planet gear 12.

By moving the input shaft in the axial direction, indicated by the arrow 13, the primary and secondary sun gears may be brought into, or out of, mesh with the first and second planet gear, respectively. In the configuration where the primary sun gear is meshed with gears of the first set of planet gears, power can be transmitted between the input shaft and the output shaft via this mesh, and when the sun gears are shifted in the direction of the arrow 13, the mesh is interrupted and the secondary sun gear is meshed with gears of the second set of planet gears to transmit the power via this mesh. In one application, the input shaft 2 and the motor 3 are fixed to each other and movement of the input shaft is performed by moving the motor 3.

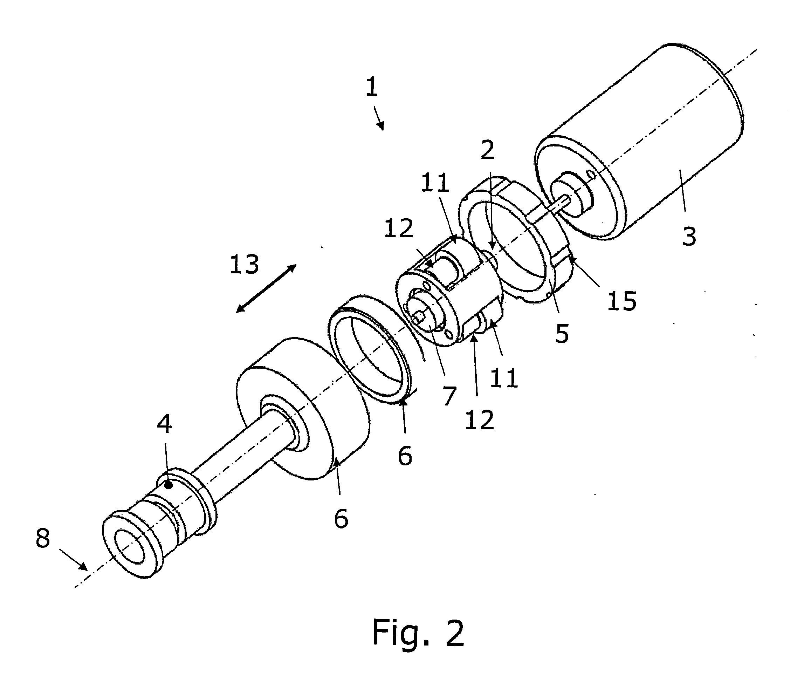

Fig. 2 shows a perspective view of a gear system of an essentially similar structure as the system disclosed in Fig. 1 and with identically marked components. The primary annulus gear 5 is fixed to a reference system via a plurality of notches 15 which engage with radially inwardly extending, flexible protrusions of the reference system so that the annulus gear can rotate stepwise when one protrusion moves from one notch to an adjacent notch. This may facilitate torque limitation e.g. in a power screwdriver. Throughout the following description, the disclosure of notches 15 indicates that it may be desired to limit or prevent rotation of the gear which is provided with the notches.

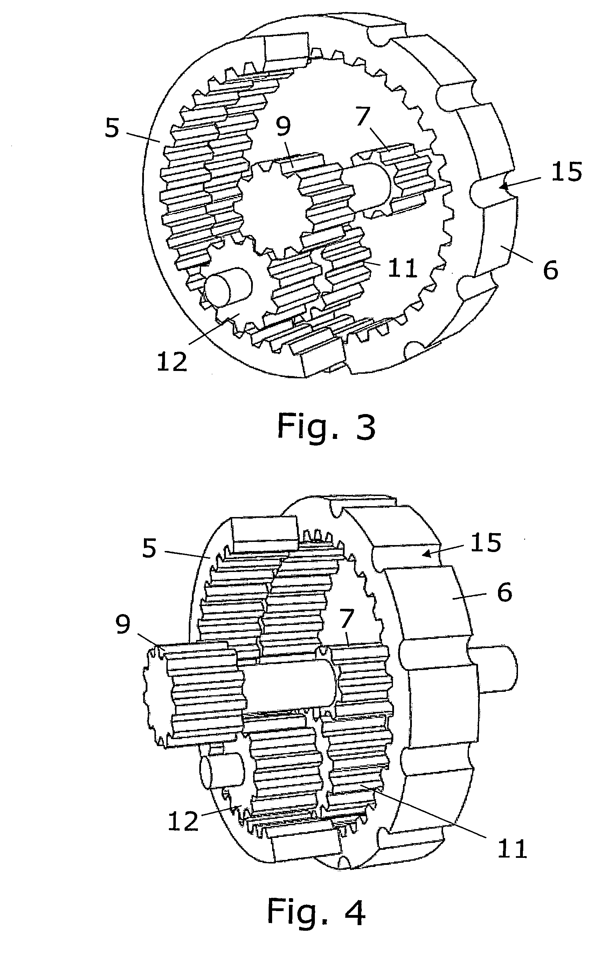

Figs. 3-4 illustrate in perspective views, a gear system similar to the system shown in Fig. 2, with identical numbers for identical parts. In the gear system of Figs. 3-4, the notches 15 are formed directly in an outer surface of the internally toothed annulus gear 6.

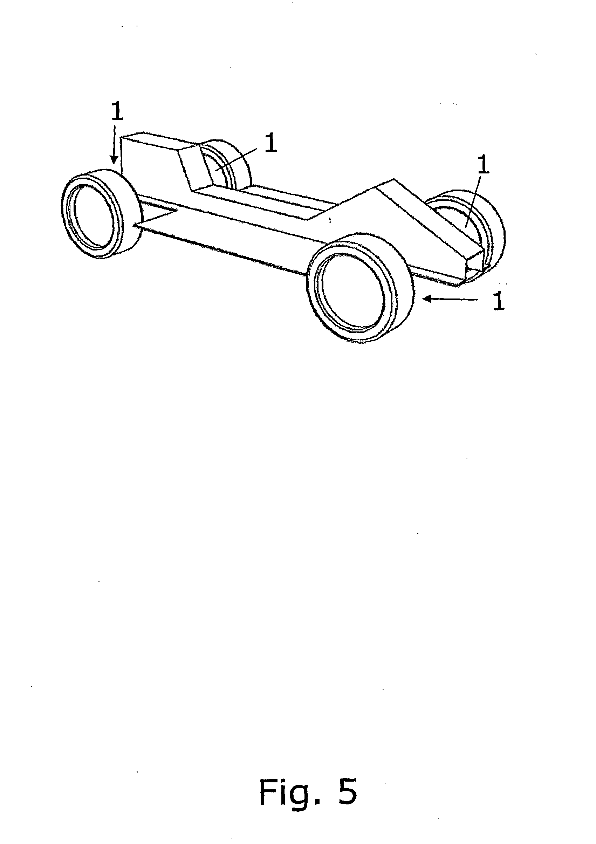

Fig. 5 illustrates a vehicle with a body and four wheels. Each wheel comprises a gear system 1 of the kind illustrated in any of the other figures. Each of the four applied gear systems allows shifting of gear ratio for each wheel individually and thus enhances the grip of the wheels on a surface with varying conditions.

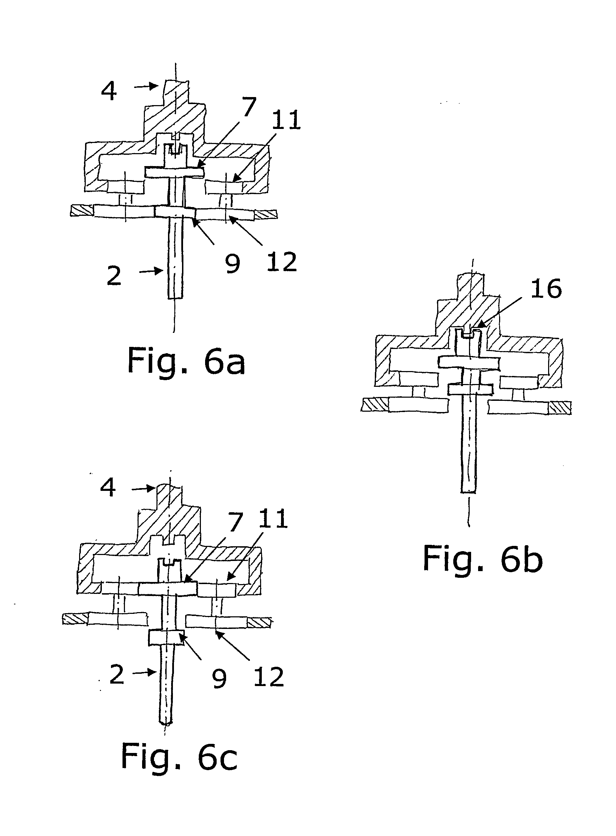

Figs. 6a, 6b and 6c illustrate an embodiment of the invention wherein the sun gears 7, 9 both form part with the input shaft 2 and thus both rotate with a speed equal to the speed of the input shaft.

Fig. 6a illustrates a configuration of the gear system wherein the secondary sun gear 9 is meshed with gears of the second set of planet gears 12. Accordingly, power is transmitted between the input shaft and the output shaft via interaction between the second ring of each planet gear and the secondary sun gear.

Fig. 6b illustrates a configuration wherein the input shaft is interlocked with the output shaft via the coupling 16 so that the two shafts rotate at equal speed. None of the sun gears are meshed with the planet gear.

Fig. 6c illustrates a configuration wherein the primary sun gear 7 is meshed with gears of the first set of planet gears 11. Accordingly, power is transmitted between the input shaft and the output shaft via the first ring of each planet gear and the primary sun gear.

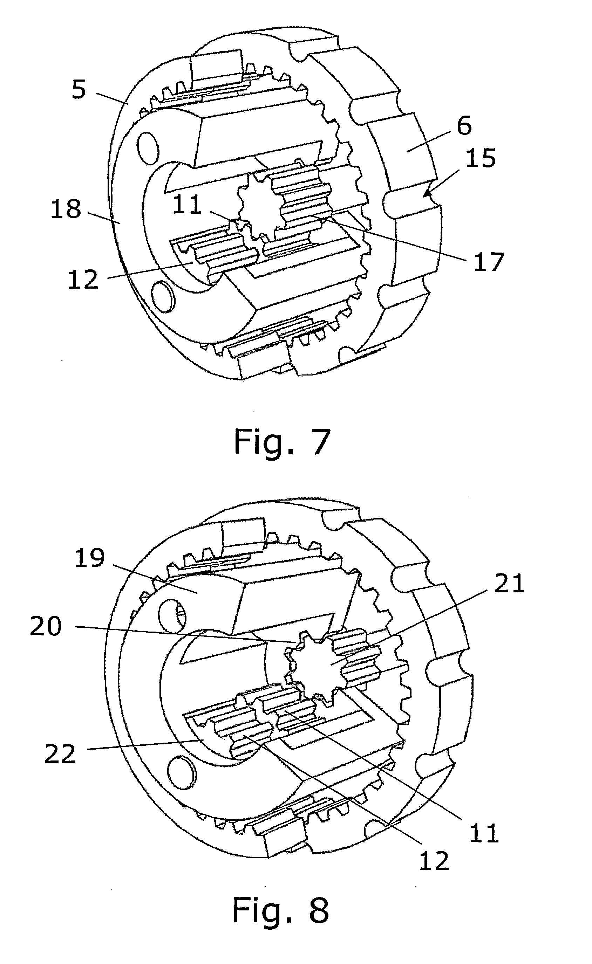

Figs. 7-9 illustrate in perspective views, gears with only one sun gear 17. In this gear, the planet gear 11 of the first set of planet gears and the planet gear 12 of the second set of planet gears are formed in one single gear wheel by a sintering process, i.e. the first and second planet gears are in fixed connection. Three gear wheels, each comprising gears of the first and second set of planet gears are held by a planet carrier 18.

The gear system illustrated in Fig. 7 comprises two annulus gears 5, 6. The gear is operated by holding the sun gear 17 fixed. One of the two annulus gears 5, 6 or the planet carrier 18 is used for an input or output while another one of the two annulus gears 5, 6 and the planet carrier 18 is used as output while the last one of the two annulus gears 5, 6 and the planet carrier 18 is held fixed. In particular, it is interesting to hold the sun gear and one of the annulus gears fixed.

The gear system illustrated in Fig. 8 comprises a planet carrier 19 which comprises an internal toothing 20 which is meshed with the sun gear 21. The sun gear can be used as input and thereby rotate the planet carrier which drives the planet gear wheels 22 with the first and second planet gears 11, 12 epicyclically around the sun gear 21.

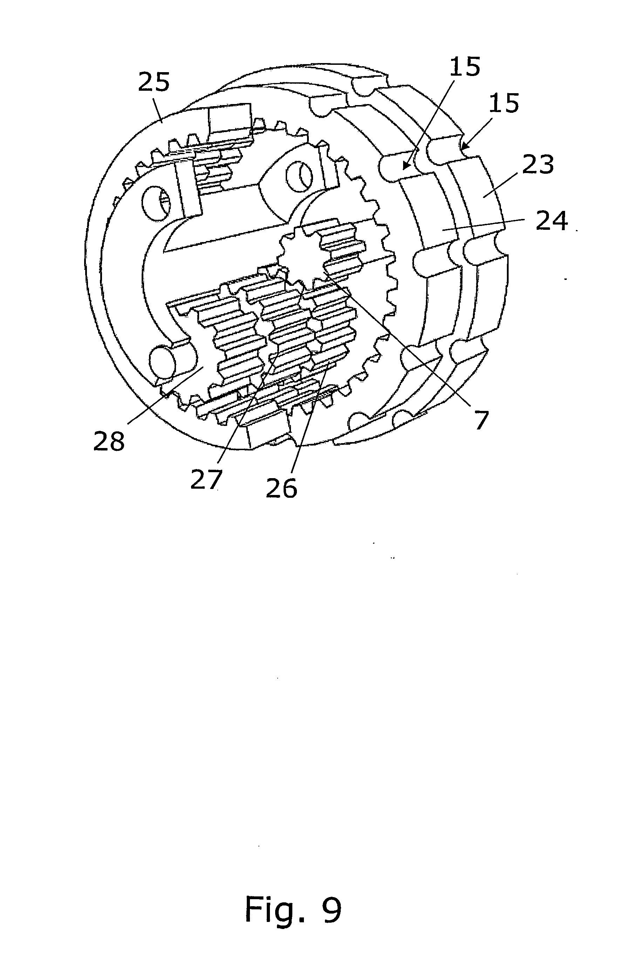

Fig. 9 illustrates an example of a servo gear, e.g. for a robot. The gear system illustrated in Fig. 9 comprises three annulus gears 23, 24, 25 which are driven by mesh with a first, a second and a third planet gear 26, 27, 28. Two of the annulus gears comprise notches 15, c.f. also Fig. 1. The notches 15 can be used for limiting or preventing rotation of one of the two annulus gears and thereby to change the gear ratio between the sun gear 7 and the annulus gear 25. As an example, input is provided on the sun gear 7 and output is provided from the annulus gear 25. During operation, the rotation of the annulus gear 23 is limited or prevented firstly thereby providing a first change in the gear ratio between input and output. Subsequently, the rotation of annulus gear 24 is limited or prevented thereby providing a second gear ratio between the input and the output. Since the rotation of the annulus gears 23, 24 can be stopped by reducing the rotational speed of the annulus gears over a certain period of time thereby providing a smooth transition between a gear ratio with unhindered rotation of the annulus gear and a gear ratio with a stopped annulus gear, the application in which the gear is attached may perform a smooth change in velocity.

If, e.g. the application is loaded heavily, a large gear ratio, i.e. a relatively fast input compared to the output may be desired. In this case, the gear system could be operated by stopping the annulus gear 23, then stopping the annulus gear 24, and when the annulus gear 24 has come to a stop, the annulus gear 23 is released and the gear shift is performed in a smooth manner. Stopping of the annulus gears could be performed by braking means, e.g. by use of a magnetic clutch.

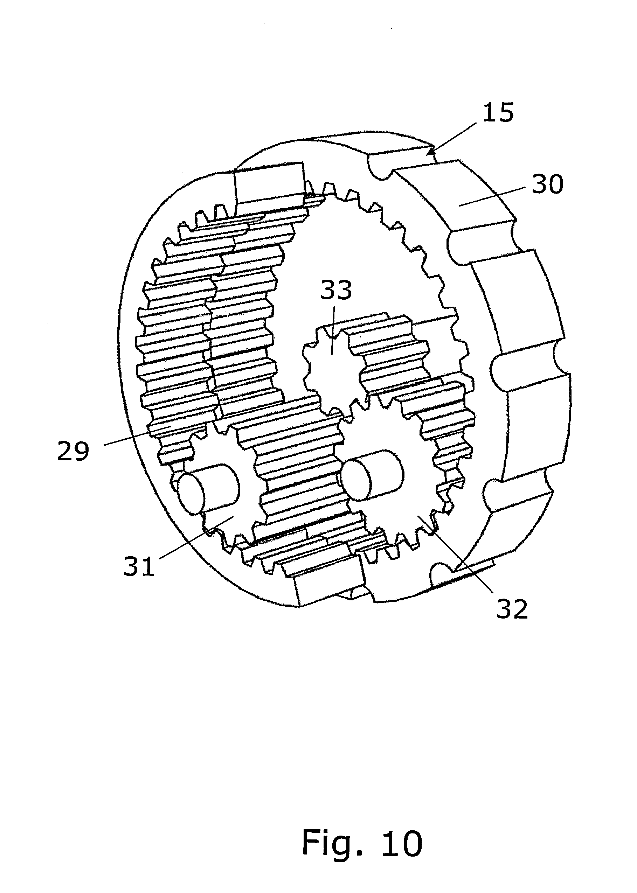

Fig. 10 discloses a gear system with an annulus gear 29 and another annulus gear 30. The annulus gear 30 is provided with notches 15 for limiting or preventing rotation of the gear. The system further comprises a planet gear 31 of a first set of planet gears and a planet gear 32 of a second set of planet gears. The planet gear 31 is meshed with the annulus gear 29 and the planet gear 32 is meshed with the annulus gear 30 and with the sun gear 33.

## Claims

1. A gear system (1) providing a gear ratio between an input shaft (2) and an output shaft (4), the system comprising:
- a primary internally driven annulus gear (5) being rotatable around a central axis (8) of the gear system,
- a secondary internally driven annulus gear (6) being rotatable around the central axis (8) of the gear system,
- a primary externally driven sun gear (7) being rotatable around the central axis (8) of the gear system,
- a secondary externally driven sun gear (9) being rotatable around the central (8) axis, and
- a first set of externally driven planet gears (11) and a second set of externally driven planet gears (12), the planet gears being arranged to rotate epicyclically around the central axis (8), and being arranged to rotate at synchronous speed, gears of one set of planet gears being meshed with one of the annulus gears and gears of one set of the planet gears being meshed with one of the sun gears,
where the system is interchangeable at least between a first configuration for transmitting power between the input shaft and the output shaft via interaction between gears of the first set of planet gears (11) and the primary sun gear (7), and a second configuration for transmitting power between the input shaft and the output shaft via interaction between the gears of the second set of planet gears (12) and the secondary sun gear (9), wherein
- the primary sun gear (7) is meshed with gears of the first set of planet gears (11),
- the secondary sun gear (9) is meshed with gears of the second set of planet gears (12),
- the system comprises coupling means adapted selectively to couple one of the sun gears to the input shaft,
- the output shaft (4) is integral with the primary annulus gear (5), and **characterised in that**
- the secondary annulus gear (6) is fixed to a reference system via a coupling which, at least in a first state, prevents rotation of the secondary annulus relative to the reference system, wherein the coupling is flexible to allow adaptation of tolerances.

2. A system according to claim 1, wherein the rotation of the planet gears is synchronised by a gear mesh between planet gears in the first set of planet gears and planet gears in the second set of planet gears.

3. A system according to claim 1, wherein planet gears in the first set of planet gears are in a fixed connection with planet gears in the second set of planet gears so that the gears rotate with the same speed.

4. A system according to claim 1, wherein interaction between at least two gears of the gear system is via traction or via magnetism.

5. A system according to claim 4, comprising switching means for selectively switching between limiting the freedom of one or the other of the annulus gears to rotate around the central axis.

6. A system according to any of the preceding claims, further comprising at least one additional set of externally driven planet gears being rotatable epicyclically around the central axis synchronously with planet gears of the first and second sets of planet gears.

7. A system according to claim 6, further comprising at least one additional internally driven annulus gear being meshed with gears of the additional set of planet gears.

8. A system according to claim 7, wherein one of the annulus gears receive power from an external source and another one of the annulus gears delivers power to an external source.

9. A system according to any of the preceding claims, further comprising at least one additional sun gear, the system being changeable between the first, the second and at least one additional configuration in which power is transmitted between the input shaft and the output shaft via interaction between gears of one of the sets of planet gears (11) and one of the additional sun gears.

10. A system according to any of the preceding claims, wherein the planet gears are joined by a planet carrier, the system further comprising braking means for limiting or preventing rotation of the planet carrier.

11. A system according to any of the preceding claims, wherein the sun gears (7, 9) are movable relative to the planet gears.

12. A system according to any of the preceding claims, wherein the input shaft (2) rotates around the centre axis (8).

13. A system according to claim 10, wherein the input shaft (2) is integral with at least one of the sun gears.

14. A system according to claims 11-13, wherein at least one of the sun gears (7, 9) can be moved relative to the planet gears by movement of the input shaft (2).

15. A system according to any of the preceding claims, wherein the coupling means is further adapted to decouple both the primary and the secondary sun gear from the input shaft thereby preventing transmission of power from the input shaft to the sun gears.

16. A system according to any of the preceding claims, wherein the output shaft (4) rotates around the central axis (8).

17. A system according to any of the preceding claims, wherein the coupling, in a second state, allows rotation of the secondary annulus relative to the reference system.

18. A system according to any of the preceding claims, wherein the coupling is shifted between the first and second states by torque applied to the secondary annulus.

19. A system according to any of the preceding claims , wherein the primary annulus gear (5) is rotatably suspended in the secondary annulus gear (6).

20. A system according to any of the preceding claims, wherein at least one of the annulus gears form part of a housing for the gear system.

21. A system according to any of the preceding claims, adapted for a configuration wherein the input shaft (2) can be interlocked with the output shaft (4) so that the two shafts rotate at equal speed.

22. A system according to claim 21, wherein power transmission through the gears is interrupted upon interlocking of the input shaft (2) with the output shaft (4).

23. A system according to any of the preceding claims, wherein the primary and secondary sun gears (7, 9) have different pitch circle or diameter.

24. A system according to any of the preceding claims, wherein each planet gear have different pitch circle or diameters.

25. A system according to any of the preceding claims, wherein two gears which do not interact have different gear module.

26. A system according to any of the preceding claims, adapted to be shifted between the different configurations while power is transmitted between the input shaft and the output shaft.

27. A system according to any of the preceding claims, wherein the planet gears are joined by a planet carrier, the system being interchangeable between the first, the second and an additional configuration, in which additional configuration, the planet carrier is used as input for the gear system.

28. A system according to claim 27, wherein the planet carrier is driven by one of the sun gears in the additional configuration.

29. A vehicle comprising a plurality of wheels, each wheel being provided with power through a gear system according to any of claims 1-28.

30. A power tool comprising an output provided with power through a gear system according to any of claims 1-28.

31. A servo gear system comprising a gear system according to any of claims 1-28.

## Patentansprüche

1. Getriebesystem (1), das ein Übersetzungsverhältnis zwischen einer Antriebswelle (2) und einer Abtriebswelle (4) vorsieht, das System umfassend:
- ein primäres, intern angetriebenes Ringrad (5), das um eine Mittelachse (8) des Getriebesystems drehbar ist,
- ein sekundäres, intern angetriebenes Ringrad (6), das um die Mittelachse (8) des Getriebesystems drehbar ist,
- ein primäres, extern angetriebenes Sonnenrad (7), das um die Mittelachse (8) des Getriebesystems drehbar ist,
- ein sekundäres, extern angetriebenes Sonnenrad (9), das um die Mittelachse (8) drehbar ist, und
- einen ersten Satz extern angetriebener Planetenräder (11) und einen zweiten Satz extern angetriebener Planetenräder (12), wobei die Planetenräder zum epizyklischen Drehen um die Mittelachse (8) angeordnet sind und zum Drehen mit synchroner Geschwindigkeit angeordnet sind, wobei Räder eines Satzes von Planetenrädern in eines der Ringräder eingerückt sind und Räder eines Satzes von Planetenrädern in eines der Sonnenräder eingerückt sind,
wobei das System zumindest zwischen einer ersten Konfiguration zum Übertragen von Kraft zwischen der Antriebswelle und der Abtriebswelle über Wechselwirkung zwischen Rädern des ersten Satzes von Planetenrädern (11) und dem primären Sonnenrad (7) und einer zweiten Konfiguration zum Übertragen von Kraft zwischen der Antriebswelle und der Abtriebswelle über Wechselwirkung zwischen den Rädern des zweiten Satzes von Planetenrädern (12) und dem sekundären Sonnenrad (9) austauschbar ist, wobei
- das primäre Sonnenrad (7) in Räder des ersten Satzes von Planetenrädern (11) eingerückt ist,
- das sekundäre Sonnenrad (9) in Räder des zweiten Satzes von Planetenrädern (12) eingerückt ist,
- das System Kupplungsmittel aufweist, die zum selektiven Kuppeln von einem der Sonnenräder an die Antriebswelle geeignet sind,
- die Abtriebswelle (4) mit dem primären Ringrad (5) einstückig ist, und
**dadurch gekennzeichnet, dass**
das sekundäre Ringrad (6) über eine Kupplung an einem Bezugssystem befestigt ist, das, zumindest in einem ersten Zustand, Drehung des sekundären Ringrads bezüglich des Bezugssystems verhindert, wobei die Kupplung zum Ermöglichen von Toleranzanpassung flexibel ist.

2. System nach Anspruch 1, wobei die Drehung der Planetenräder durch Radeinrückung zwischen Planetenrädern im ersten Satz von Planetenrädern und Planetenrädern im zweiten Satz von Planetenrädern synchronisiert ist.

3. System nach Anspruch 1, wobei sich die Planetenräder im ersten Satz von Planetenrädern in einer starren Verbindung mit Planetenrädern im zweiten Satz von Planetenrädern befinden, sodass die Räder mit derselben Geschwindigkeit drehen.

4. System nach Anspruch 1, wobei Wechselwirkung zwischen zumindest zwei Rädern des Getriebesystems über Traktion oder über Magnetismus erfolgt.

5. System nach Anspruch 4, umfassend Schaltmittel zum selektiven Schalten zwischen Begrenzen der Freiheit von einem oder dem anderen der Ringräder zum Drehen um die Mittelachse.

6. System nach einem der vorhergehenden Ansprüche, ferner umfassend zumindest einen zusätzlichen Satz von extern angetriebenen Planetenrädern, die epizyklisch um die Drehachse synchron mit Planetenrädern des ersten und zweiten Satzes von Planetenrädern drehbar sind.

7. System nach Anspruch 6, ferner umfassend zumindest ein zusätzliches, intern angetriebenes Ringrad, das in Räder des zusätzlichen Satzes von Planetenrädern eingerückt ist.

8. System nach Anspruch 7, wobei eines der Ringräder Kraft aus einer externen Quelle aufnimmt und ein anderes der Ringräder eine externe Quelle mit Kraft versieht.

9. System nach einem der vorhergehenden Ansprüche, ferner umfassend zumindest ein zusätzliches Sonnenrad, wobei das System zwischen der ersten, der zweiten und zumindest einer zusätzlichen dritten Konfiguration veränderbar ist, in welcher Kraft zwischen der Antriebswelle und der Abtriebswelle über Wechselwirkung zwischen einem der Sätze von Planetenrädern (11) und einem der zusätzlichen Sonnenräder übertragen wird.

10. System nach einem der vorhergehenden Ansprüche, wobei die Planetenräder durch einen Planetenradträger verbunden sind, wobei das System ferner Bremsmittel zum Begrenzen oder Verhindern von Drehung des Planetenradträgers umfasst.

11. System nach einem der vorhergehenden Ansprüche, wobei die Sonnenräder (7, 9) bezüglich der Planetenräder beweglich sind.

12. System nach einem der vorhergehenden Ansprüche, wobei die Antriebswelle (2) um die Mittelachse (8) dreht.

13. System nach Anspruch 10, wobei die Antriebswelle (2) mit zumindest einem der Sonnenräder einstückig ist.

14. System nach einem der Ansprüche 11 bis 13, wobei zumindest eines der Sonnenräder (7, 9) durch Bewegung der Antriebswelle (2) bezüglich der Planetenräder bewegt werden kann.

15. System nach einem der vorhergehenden Ansprüche, wobei das Kupplungsmittel ferner zum Entkuppeln des primären sowie des sekundären Sonnenrads von der Antriebswelle geeignet ist, wodurch die Übertragung von Kraft von der Antriebswelle auf die Sonnenräder verhindert ist.

16. System nach einem der vorhergehenden Ansprüche, wobei die Abtriebswelle (4) um die Mittelachse (8) dreht.

17. System nach einem der vorhergehenden Ansprüche, wobei die Kupplung, in einem zweiten Zustand, Drehung des sekundären Ringrads bezüglich des Bezugssystems ermöglicht.

18. System nach einem der vorhergehenden Ansprüche, wobei die Kupplung durch ein Drehmoment, das auf das zweite Ringrad ausgeübt ist, zwischen dem ersten und zweiten Zustand verstellt wird.

19. System nach einem der vorhergehenden Ansprüche, wobei das primäre Ringrad (5) drehbar im sekundären Ringrad (6) aufgehängt ist.

20. System nach einem der vorhergehenden Ansprüche, wobei zumindest eines der Ringräder ein Teil eines Gehäuses für das Getriebesystem ausbildet.

21. System nach einem der vorhergehenden Ansprüche, das für eine Konfiguration geeignet ist, bei der die Antriebswelle (2) derart mit der Abtriebswelle (4) verblockt sein kann, dass die zwei Wellen mit gleicher Geschwindigkeit drehen.

22. System nach Anspruch 21, wobei Kraftübertragung durch die Räder auf Verblocken der Antriebswelle (2) mit der Abtriebswelle (4) hin unterbrochen ist.

23. System nach einem der vorhergehenden Ansprüche, wobei die primären und sekundären Sonnenräder (7, 9) unterschiedlichen Teilkreis oder Durchmesser aufweisen.

24. System nach einem der vorhergehenden Ansprüche, wobei jedes Planetenrad unterschiedlichen Teilkreis oder Durchmesser aufweist.

25. System nach einem der vorhergehenden Ansprüche, wobei zwei Räder, die nicht in Wechselwirkung stehen, unterschiedliches Radmodul aufweisen.

26. System nach einem der vorhergehenden Ansprüche, das dazu geeignet ist, zwischen den verschiedenen Konfigurationen verstellt zu werden, während Kraft zwischen der Antriebswelle und der Abtriebswelle übertragen ist.

27. System nach einem der vorhergehenden Ansprüche, wobei die Planetenräder durch einen Planetenradträger verbunden sind, wobei das System zwischen der ersten, der zweiten und einer zusätzlichen Konfiguration veränderbar ist, wobei der Planetenradträger in der zusätzlichen Konfiguration als Zufuhr für das Getriebesystem benutzt ist.

28. System nach Anspruch 27, wobei der Planetenradträger in der zusätzlichen Konfiguration von einem der Sonnenräder angetrieben ist.

29. Fahrzeug, das mehrere Räder umfasst, wobei jedes Rad mit Kraft durch ein Getriebesystem nach einem der Ansprüche 1 bis 28 versorgt wird.

30. Elektrowerkzeug, das eine Leistungsabgabe umfasst, die mit durch ein Getriebesystem nach einem der Ansprüche 1 bis 28 versorgt wird.

31. Servogetriebesystem, das ein Getriebesystem nach einem der Ansprüche 1 bis 28 umfasst.

## Revendications

1. Système d'engrenages (1) fournissant un rapport d'engrenages entre un arbre primaire (2) et un arbre secondaire (4), le système comprenant :
- une couronne primaire à entrainement interne (5) rotative sur un axe central (8) du système d'engrenages,
- une couronne secondaire à entraînement interne (6) rotative sur l'axe central (8) du système d'engrenages,
- un engrenage solaire primaire à entraînement externe (7) rotatif sur l'axe central (8) du système d'engrenages,
- un engrenage solaire secondaire à entraînement externe (9) rotatif sur l'axe central (8), et
- un premier jeu d'engrenages planétaires à entraînement externe (11) et un second jeu d'engrenages planétaires à entraînement externe (12), les engrenages planétaires étant agencés pour tourner de façon épicyclique sur l'axe central (8), et étant agencés pour tourner à vitesse synchrone, des engrenages d'un jeu d'engrenages planétaires étant engrenés avec l'une des couronnes et des engrenages d'un jeu des engrenages planétaires étant engrenés avec l'un des engrenages solaires,
sachant que le système est interchangeable au moins entre une première configuration pour transmettre de la puissance entre l'arbre primaire et l'arbre secondaire via l'interaction entre les engrenages du premier jeu d'engrenages planétaires (11) et l'engrenage solaire primaire (7), et une seconde configuration pour transmettre de la puissance entre l'arbre primaire et l'arbre secondaire via l'interaction entre les engrenages du second jeu d'engrenages planétaires (12) et l'engrenage solaire secondaire (9), sachant que
- l'engrenage solaire primaire (7) est engrené avec des engrenages du premier jeu d'engrenages planétaires (11),
- l'engrenage solaire secondaire (9) est engrené avec des engrenages du second jeu d'engrenages planétaires (12),
- le système comprend un moyen de couplage adapté de façon sélective pour coupler l'un des engrenages solaires à l'arbre primaire,
- l'arbre secondaire (4) est monobloc avec la couronne primaire (5), et
**caractérisé en ce que**
- la couronne secondaire (6) est fixée à un système de référence avec un couplage qui, au moins dans un premier état, empêche la rotation de la couronne secondaire par rapport au système de référence, sachant que le couplage est flexible pour permettre l'adaptation des tolérances.

2. Système selon la revendication 1, dans lequel la rotation des engrenages planétaires est synchronisée par un engrènement d'engrenages entre des engrenages planétaires dans le premier jeu d'engrenages planétaires et des engrenages planétaires dans le second jeu d'engrenages planétaires.

3. Système selon la revendication 1, dans lequel des engrenages planétaires dans le premier jeu d'engrenages planétaires sont en connexion fixe avec des engrenages planétaires dans le second jeu d'engrenages planétaires, de sorte que les engrenages tournent à la même vitesse.

4. Système selon la revendication 1, dans lequel l'interaction entre au moins deux engrenages du système d'engrenages se fait par traction ou magnétisme.

5. Système selon la revendication 4, comprenant un moyen de commutation pour commuter de façon sélective entre les limitations de liberté de l'une ou de l'autre des couronnes de tourner autour de l'axe central.

6. Système selon l'une quelconque des revendications précédentes, comprenant en outre au moins un jeu supplémentaire d'engrenages planétaires à entraînement externe pouvant tourner de façon épicyclique autour de l'axe central de façon synchrone avec des engrenages planétaires des premier et second jeux d'engrenages planétaires.

7. Système selon la revendication 6, comprenant en outre au moins une couronne à entraînement interne supplémentaire engrenée avec des engrenages du jeu supplémentaire d'engrenages planétaires.

8. Système selon la revendication 7, dans lequel l'une des couronnes reçoit de la puissance d'une source externe et l'autre des couronnes fournit de la puissance à une source externe.

9. Système selon l'une quelconque des revendications précédentes, comprenant en outre au moins un engrenage solaire supplémentaire, le système pouvant passer entre les première et seconde configurations et au moins une configuration supplémentaire dans laquelle la puissance est transmise entre l'arbre primaire et l'arbre secondaire via l'interaction entre des engrenages de l'un des jeux d'engrenages planétaires (11) et de l'un des engrenages solaires supplémentaires.

10. Système selon l'une quelconque des revendications précédentes, dans lequel les engrenages planétaires sont joints par un porte-satellites, le système comprenant en outre un moyen de freinage pour limiter ou empêcher la rotation du porte-satellites.

11. Système selon l'une quelconque des revendications précédentes, dans lequel les engrenages solaires (7, 9) peuvent se déplacer par rapport aux engrenages planétaires.

12. Système selon l'une quelconque des revendications précédentes, dans lequel l'arbre primaire (2) tourne sur l'axe central (8).

13. Système selon la revendication 10, dans lequel l'arbre primaire (2) est monobloc avec au moins un des engrenages solaires.

14. Système selon l'une des revendications 11 à 13, dans lequel au moins un des engrenages solaires (7, 9) peut se déplacer par rapport aux engrenages planétaires par le mouvement de l'arbre primaire (2).

15. Système selon l'une quelconque des revendications précédentes, dans lequel le moyen de couplage est en outre adapté pour découpler à la fois les engrenages solaires primaire et secondaire de l'arbre primaire, évitant ainsi la transmission de puissance de l'arbre primaire aux engrenages solaires.

16. Système selon l'une quelconque des revendications précédentes, dans lequel l'arbre primaire (4) tourne sur l'axe central (8).

17. Système selon l'une quelconque des revendications précédentes, dans lequel le couplage, dans un second état, permet la rotation de la couronne secondaire par rapport au système de référence.

18. Système selon l'une quelconque des revendications précédentes, dans lequel le couplage est commuté entre les premier et second états par un couple appliqué à la couronne secondaire.

19. Système selon l'une quelconque des revendications précédentes, dans lequel la couronne primaire (5) est suspendue en rotation dans la couronne secondaire (6).

20. Système selon l'une quelconque des revendications précédentes, dans lequel au moins une des couronnes forme une partie d'un carter pour le système d'engrenages.

21. Système selon l'une quelconque des revendications précédentes, adapté pour une configuration dans laquelle l'arbre primaire (2) peut être interverrouillé avec l'arbre secondaire (4) façon à ce que les deux arbres tournent à vitesse égale.

22. Système selon la revendication 21, dans lequel la transmission de puissance par les engrenages est interrompue lors de l'interverrouillage de l'arbre primaire (2) avec l'arbre secondaire (4).

23. Système selon l'une quelconque des revendications précédentes, dans lequel les engrenages solaires (7, 9) primaire et secondaire présentent un cercle ou diamètre primitif différent.

24. Système selon l'une quelconque des revendications précédentes, dans lequel chaque engrenage planétaire présente des cercles ou diamètres primitifs différents.

25. Système selon l'une quelconque des revendications précédentes, dans lequel deux engrenages qui n'interagissent pas ont un module d'engrenage différent.

26. Système selon l'une quelconque des revendications précédentes, adapté pour être commuté entre les différentes configurations tandis que la puissance est transmise entre l'arbre primaire et l'arbre secondaire.

27. Système selon l'une quelconque des revendications précédentes, dans lequel les engrenages planétaires sont joints par un porte-satellites, le système étant interchangeable entre les première et seconde configurations et une configuration supplémentaire, dans laquelle configuration supplémentaire le porte-satellites est utilisé en primaire pour le système d'engrenages.

28. Système selon la revendication 27, dans lequel le porte-satellites est entraîné par l'un des engrenages solaires dans la configuration supplémentaire.

29. Véhicule comprenant une pluralité de roues, chaque roue étant alimentée en puissance via un système d'engrenages selon l'une quelconque des revendications 1 à 28.

30. Outil mécanique comprenant une sortie alimentée en puissance via un système d'engrenages selon l'une quelconque des revendications 1 à 28.

31. Système de servo-engrenages comprenant un système d'engrenages selon l'une quelconque des revendications 1 à 28.
